# EUROPEAN PATENT APPLICATION

(11) **EP 3 671 692 A1**
(43) Date of publication of application: **24.06.2020**
(21) Application number: 18214243.0
(22) Date of filing: 19.12.2018
(51) Int. Cl.: G08G 1/087, G08G 1/00

(54) **TIME FOR PASSAGE OF A PLATOON OF VEHICLES**

(71) Applicant: Ningbo Geely Automobile Research & Development Co. Ltd., Hangzhou Bay New District Ningbo 315336 (CN)
(72) Inventor: NILSSON, Magnus, 448 37 FLODA (SE); SETTERBERG, Johan, 416 79 GÖTEBORG (SE)
(74) Representative: Zacco Sweden AB

(57) **Abstract**

A method for controlling a time for passage of a group of vehicles. The method comprises sending (100), by a first vehicle, an identifying signal to at least a second vehicle in the group of vehicles and receiving (200), by the first vehicle, a response signal from the at least second vehicle in the group of vehicles. The method further comprises determining (400) a time for passaging a certain point along a road for the group of vehicles based on the response signal, and communicating (600) the determined time to a roadside unit.

Corresponding apparatus, computer program product and system are also disclosed.

## Description

### TECHNICAL FIELD

The present disclosure relates generally to the field of platooning of vehicles. More particularly, it relates to controlling a time for passage of a platoon of vehicles.

### BACKGROUND

An objective of platooning vehicles may typically be to be act and be seen as a unity.

Platooning vehicles or platooning vehicle trains, , i.e. a group of vehicles, might impact the infrastructure e.g. at traffic lights wherein a platooning vehicle train might not be able to complete the drive until the state of the traffic lights changes from green to red.

Traffic flows may be controlled by means of adaptive traffic signals, wherein such signals adjust signal timing parameters, in real-time, to adapt to traffic conditions. An example of this may be busses or trams that are able to inform the adaptive traffic signals ahead of their arrival and get priority for passage.

Therefore, it is a further objective of platooning vehicles, in addition to maintaining the platooning vehicle train as a unity which shall not be divided until configured otherwise, to ensure that the platooning vehicle train does not impact other vehicles in the traffic flows e.g. if the state of the traffic lights changes while in transit through an intersection.

Hence, there is a need for alternative approaches to controlling a time for passage of a group of vehicles.

### SUMMARY

It should be emphasized that the term "comprises/comprising" when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.

Generally, when an arrangement is referred to herein, it is to be understood as a physical product; e.g., an apparatus. The physical product may comprise one or more parts, such as controlling circuitry in the form of one or more controllers, one or more processors, or the like.

An object of some embodiments is to provide alternative approaches to controlling a time for passage of a group of vehicles.

According to a first aspect, this is achieved by a method for controlling a time for passage of a group of vehicles.

The method comprises sending, by a first vehicle, an identifying signal to at least a second vehicle in the group of vehicles and receiving, by the first vehicle, a response signal from the at least second vehicle in the group of vehicles.

The method further comprises determining a time for passaging a certain point along a road for the group of vehicles based on the response signal and communicating the determined time to a roadside unit.

An advantage of some embodiments is that alternative approaches to controlling a time for passage of a platoon of vehicles are provided.

Another advantage of some embodiments is that a real-time adaption to traffic conditions and competing flows of traffic is provided even for platooning vehicles.

Yet an advantage of some embodiments is that a predictability is provided even for platooning vehicles.

Yet another advantage of some embodiments is a safer traffic situation especially in environments with competing traffic flows.

In some embodiments, the method further comprises determining a position of the at least second vehicle in the group of vehicles based on the received response signal.

An advantage of some embodiments is that the first vehicle is aware of the position of the at least second vehicle in the group of vehicles so that the first vehicle is in control of the group of vehicles in terms of knowing the configuration of the group of vehicles.

In some embodiments, the position of the at least second vehicle in the group is the last position in the group of vehicles.

An advantage of some embodiments is that the first vehicle is aware of the which vehicle is in the last position in the group of vehicles so that the first vehicle is in control of the group of vehicles in terms of knowing the configuration of the group of vehicles.

In some embodiments, the identifying signal comprises a broadcast signal comprising an identity, properties, timecode and position of the first vehicle in the group of vehicles.

An advantage of some embodiments is that the identifying signal is sent to all vehicles in the group of vehicles so that the first vehicle is assured that all vehicles in the group of vehicles will be able to receive the identifying signal.

Another advantage of some embodiments is that a more accurate length of group of vehicles may be determined via the identifying signal.

In some embodiments, the identifying signal is continuously broadcasted.

An advantage of some embodiments is that since the identifying signal is continuously broadcasted a continuous awareness of the configuration of the group of vehicles is provided and therefore a continuous control is enabled.

In some embodiments, the response signal comprises an identity, properties, timecode and position of the at least second vehicle in the group of vehicles.

An advantage of some embodiments is that a more accurate length of group of vehicles may be determined via the response signal.

In some embodiments, the first vehicle comprises a leader vehicle and the at least second vehicle comprises a following vehicle.

An advantage of some embodiments is that the leader vehicle controls the following vehicle in the group of vehicles.

In some embodiments, the group of vehicles comprises a leader vehicle and a plurality of following vehicles.

An advantage of some embodiments is that the leader vehicle controls the following vehicles in the group of vehicles.

In some embodiments, the group of vehicles is a platoon of vehicles.

An advantage of some embodiments is that the platoon of vehicles is seen as a unity.

In some embodiments, the method further comprises adapting a speed of the platoon to a threshold value in response to the determined time for passage of a certain point along the road so that passage of the platoon can be completed.

An advantage of some embodiments is that the impact on competing traffic flows is minimized.

In some embodiments, the method further comprises identifying an additional leader vehicle amongst the plurality of following vehicles and setting up a new configuration for the platoon.

The method further comprises sending a configuring signal comprising information regarding the new configuration to the identified additional leader vehicle and the following vehicles assigned to the identified additional leader vehicle.

An advantage of some embodiments is that the group of vehicles is able to adapt to traffic conditions and competing traffic flows.

In some embodiments, the road side unit is controlled via a controller comprised in the road side unit and/or in a cloud service.

An advantage of some embodiments is that the controller may be locally and/or remotely controlled.

A second aspect is a computer program product comprising a non-transitory computer readable medium, having thereon a computer program comprising program instructions. The computer program is loadable into a data processing unit and configured to cause execution of the method according to the first aspect when the computer program is run by the data processing unit.

A third aspect is an apparatus for controlling a time for passage of a group of vehicles.

The apparatus comprises a memory comprising executable instructions and one or more processors configured to communicate with the memory.

The one or more processors are configured to cause the apparatus to send an identifying signal to at least a second vehicle in the group of vehicles and receive a response signal from the at least second vehicle in the group of vehicles.

The one or more processors are further configured to cause the apparatus to determine a time for passaging a certain point along a road for the group of vehicles based on the response signal and communicate the determined time to a roadside unit.

An advantage of some embodiments is that alternative approaches to controlling a time for passage of a platoon of vehicles are provided.

Another advantage of some embodiments is that a real-time adaption to traffic conditions and competing flows of traffic is provided even for platooning vehicles.

Yet an advantage of some embodiments is that a predictability is provided even for platooning vehicles.

Yet another advantage of some embodiments is a safer traffic situation especially in environments with competing traffic flows.

In some embodiments, the one or more processors are further configured to cause the apparatus to determine a position of the at least second vehicle in the group of vehicles based on the received response signal.

An advantage of some embodiments is that the first vehicle is aware of the position of the at least second vehicle in the group of vehicles so that the first vehicle is in control of the group of vehicles in terms of knowing the configuration of the group of vehicles.

A fourth aspect is a vehicle comprising the apparatus of the third aspect.

A fifth aspect is a system for controlling a time for passage of a group of vehicles.

The system comprises a sending module configured to send an identifying signal to at least a second vehicle in the group of vehicles and a receiving module configured to receive a response signal from the at least second vehicle in the group of vehicles.

The system further comprises a time determining module configured to determine a time for passaging a certain point along a road for the group of vehicles based on the response signal and a communication module (405) configured to communicate the determined time to a roadside unit.

An advantage of some embodiments is that alternative approaches to controlling a time for passage of a platoon of vehicles are provided.

Another advantage of some embodiments is that a real-time adaption to traffic conditions and competing flows of traffic is provided even for platooning vehicles.

Yet an advantage of some embodiments is that a predictability is provided even for platooning vehicles.

Yet another advantage of some embodiments is a safer traffic situation especially in environments with competing traffic flows.

In some embodiments, the system further comprises a position determining module configured to determine a position of the at least second vehicle in the group of vehicles based on the received response signal.

An advantage of some embodiments is that the first vehicle is aware of the position of the at least second vehicle in the group of vehicles so that the first vehicle is in control of the group of vehicles in terms of knowing the configuration of the group of vehicles.

In some embodiments, any of the above aspects may additionally have features identical with or corresponding to any of the various features as explained above for any of the other aspects.

### BRIEF DESCRIPTION OF THE DRAWINGS

Further objects, features and advantages will appear from the following detailed description of embodiments, with reference being made to the accompanying drawings. The drawings are not necessarily to scale, emphasis instead being placed upon illustrating the example embodiments.
Figure 1a is a flowchart illustrating example method steps according to some embodiments;
Figure 1b is a flowchart illustrating example method steps according to some embodiments;
Figure 2 is a schematic overview illustrating an example system according to some embodiments;
Figure 3a is a schematic drawing illustrating example signaling according to some embodiments;
Figure 3b is a schematic drawing illustrating example signaling according to some embodiments;
Figure 4 is a schematic block diagram illustrating an example arrangement according to some embodiments; and
Figure 5 is a schematic drawing illustrating an example computer readable medium according to some embodiments.

### DETAILED DESCRIPTION

As already mentioned above, it should be emphasized that the term "comprises/comprising" when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.

Embodiments of the present disclosure will be described and exemplified more fully hereinafter with reference to the accompanying drawings. The solutions disclosed herein can, however, be realized in many different forms and should not be construed as being limited to the embodiments set forth herein.

In the following, embodiments will be described where alternative approaches to controlling a time for passage of a group of vehicles.

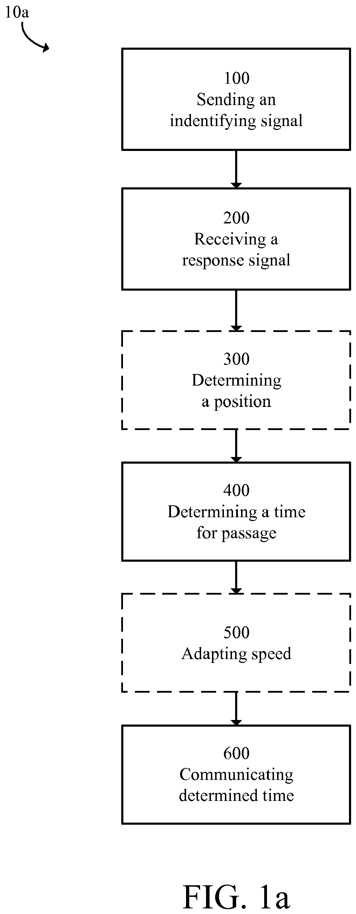

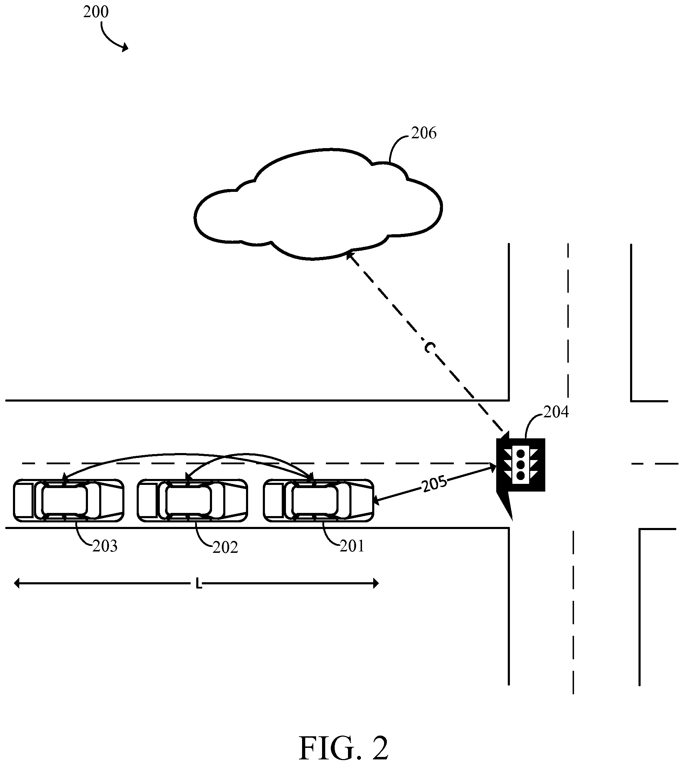

Figure 1a is a flowchart illustrating example method steps according to some embodiments. The time controlling method 10a is for controlling a time for passage of a group of vehicles. Thus, the time controlling method 10a may, for example, be performed by the time controlling system 200 of Figure 2 for controlling a time for passage of a group of vehicles.

The time controlling method 10a comprises following steps.

In step 100, a first vehicle sends, an identifying signal to at least a second vehicle in the group of vehicles.

The first vehicle and the at least second vehicle in the group of vehicles are capable of Vehicle to Vehicle (V2V) communication. The V2V technology enables an exchange of signals, i.e. information, between V2V communication enabled vehicles.

In some embodiments, the first vehicle comprises a leader vehicle and the at least second vehicle comprises a following vehicle.

In some embodiments, the group of vehicles comprises a leader vehicle and a plurality of following vehicles.

In some embodiments, the group of vehicles is a platoon of vehicles.

In some embodiments, the identifying signal comprises a broadcast signal comprising an identity, properties, timecode and position of the first vehicle in the group of vehicles.

In some embodiments, the identifying signal is continuously broadcasted or periodically broadcasted e.g. every 30 seconds.

The identifying signal may be broadcasted to all vehicles in the group of vehicles.

In step 200, the first vehicle receives a response signal from the at least second vehicle in the group of vehicles.

In some embodiments, the response signal comprises an identity, properties, timecode and position of the at least second vehicle in the group of vehicles.

In step 400, a time for passaging a certain point along a road for the group of vehicles based on the response signal is determined.

In step 600, the determined time is communicated to a roadside unit.

In some embodiments, the road side unit may be controlled via a controller comprised in the road side unit and/or in a cloud service.

In some embodiments, the time controlling method 10a further comprises the following step.

In step 300, a position of the at least second vehicle in the group of vehicles is determined based on the received response signal.

In some embodiments, the position of the at least second vehicle in the group is the last position in the group of vehicles.

In some embodiments, the time controlling method 10a further comprises the following step.

In step 500, a speed of the platoon is adapted to a threshold value in response to the determined time for passage of a certain point along the road so that passage of the platoon can be completed.

As an example, a road side unit, e.g. a traffic light, may allocate a certain time for which the green state will remain green which in turn is communicated to the first vehicle, i.e. the leader vehicle, at request from the leader vehicle via Vehicle to Infrastructure (V2I) communication. The leader vehicle then determines based on a response signal from the at least second vehicle, i.e. the following vehicle, the length of the group of vehicles and thereby also the time it would take for the group of vehicles to pass the certain point along the road, in this case the traffic light, and communicates the determined time to the road side unit.

In case the determined time for the group of vehicles exceeds the allocated time for which the green state will remain green, as communicated by the road side unit, the first vehicle, i.e. the leader vehicle, may determine that an adjustment of the speed of the group of vehicles will adjust the determined time for the group of vehicles so that the group may be able to pass in the time allocated by the road side unit.

An adjustment of the speed may comprise an increase or a decrease of the speed e.g. "Increase the speed of the platoon to 45 km/h". The leader vehicle may then communicate this instruction to the following vehicles via V2V communication or any other suitable communication for information exchange between vehicles.

In addition to the adjustment of the speed or as an alternative, the leader vehicle may also determine that an adjustment of the distance between the vehicles needs to be adjusted in order to reduce the length of the group of vehicles and thereby the time for passage e.g. "Decrease distance to vehicle in front of you to 2 meters." The leader vehicle may communicate this instruction to the following vehicles via V2V communication or any other suitable communication for information exchange between vehicles.

The first vehicle, i.e. the leader vehicle, may also determine that based on the determined time for passage compared to the allocated time by the road side unit, that no adaption of the speed is necessary and hence the speed may be maintained without adjustments.

A non-adjustment of the speed may comprise a maintenance of the speed e.g. "Maintain the speed of the platoon at 30 km/h". The leader vehicle may communicate this instruction to the following vehicles via V2V communication or any other suitable communication for information exchange between vehicles.

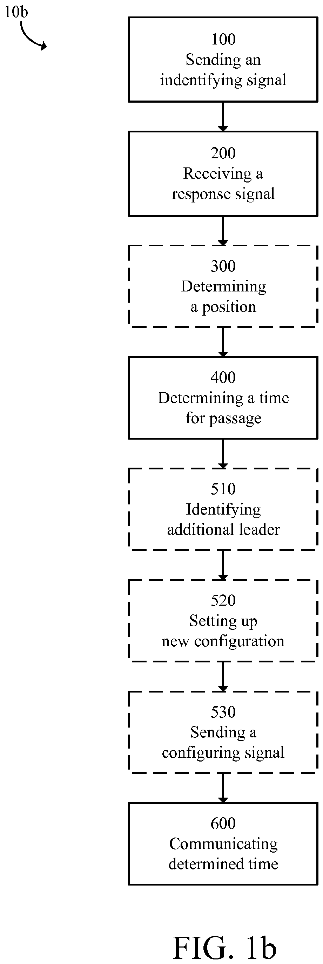

Figure 1b is a flowchart illustrating example method steps according to some embodiments. The time controlling method 10b is for controlling a time for passage of a group of vehicles. Thus, the time controlling method 10a may, for example, be performed by the time controlling system 200 of Figure 2 for controlling a time for passage of a group of vehicles.

Steps 100, 200, 400 and 600 of the time controlling method 10a illustrated in Figure 1a correspond to steps 100, 200, 400 and 600 of the time controlling method 10b illustrated in Figure 1b.

In some embodiments, step 300 of the time controlling method 10a illustrated in Figure 1a corresponds to step 300 of the time controlling method 10b illustrated in Figure 1b.

In some embodiments, the time controlling method 10b further comprises the following steps.

In step 510, an additional leader vehicle amongst the plurality of following vehicles is identified.

The additional leader vehicle may be identified by the original leader vehicle.

In step 520, a new configuration for the platoon is set up.

The new configuration may be set up by the original leader vehicle.

In step 530, a configuring signal comprising information regarding the new configuration is sent to the identified additional leader vehicle and the following vehicles assigned to the identified additional leader vehicle.

The configuring signal may comprise information regarding the additional leader vehicle, which following vehicle(s) that will follow the additional leader vehicle, the distance that should be held between the vehicles and which speed that should be maintained until otherwise instructed.

As an example, a road side unit, e.g. a traffic light, may allocate a certain time for which the green state will remain green which in turn is communicated to the first vehicle, i.e. the leader vehicle, at request from the leader vehicle via V2I communication. The leader vehicle determines based on a response signal from the at least second vehicle, i.e. the following vehicle, the length of the group of vehicles and thereby also the time it would take for the group of vehicles to pass the certain point along the road, in this case the traffic light, and communicates the determined time to the road side unit.

In case the determined time for the group of vehicles exceeds the allocated time for which the green state will remain green, as communicated by the road side unit, the first vehicle, i.e. the leader vehicle, may determine that the group of vehicles must be divided in order to reduce the length and thereby the passage time. Therefore, the leader vehicle, will identify a second vehicle, i.e. a following vehicle, to be a new leader vehicle, i.e. a first vehicle, in a new group of vehicles and also the associated following vehicles for that new leader vehicle and new group of vehicles. The new group of vehicles may comprise a different number of vehicles compared to the remaining vehicles in the original group of vehicles, it is the passage time that will determine the maximum length (i.e. the number of vehicles and the distance between them) of the original and new group of vehicles so that the group(s) of vehicles may be able to pass in the time allocated by the road side unit.

For the new configuration, the new leader vehicle, i.e. the first vehicle, may adjust the speed according to the method steps of method 10a described in Figure 1a. The original platoon and its leader vehicle may of course also adjust the speed according to the methods steps of method 10a described in Figure 1a.

In the new configuration, the new leader vehicle, may be in a situation similar to the original platoon which it was configured from, and the new configuration may also be divided according to the same method steps of method 10b described in Figure 1b.

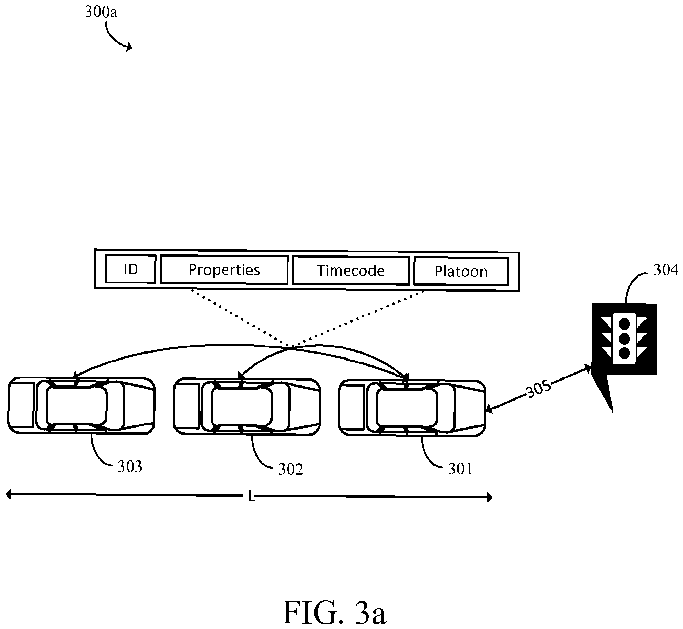

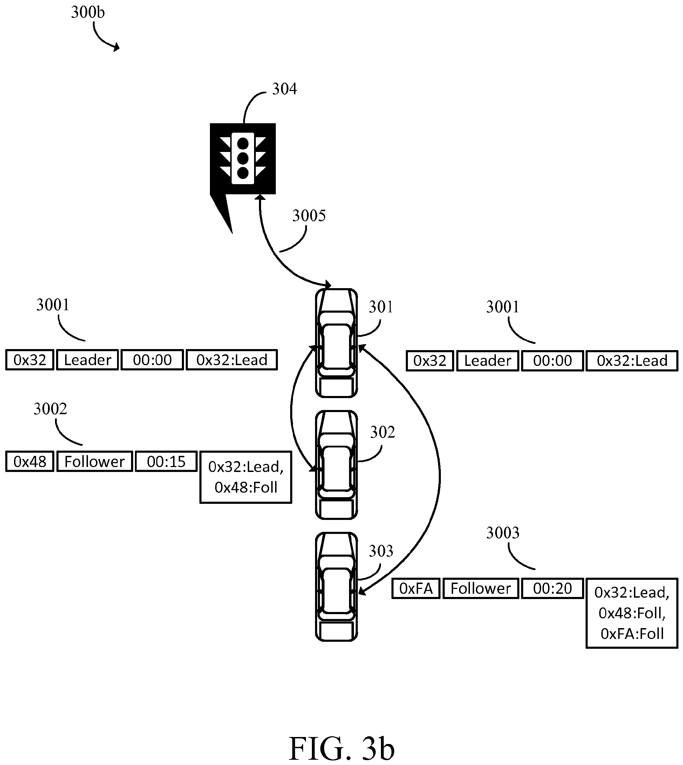

Figure 2 is a schematic overview illustrating an example system according to some embodiments. The time controlling system 200 is for controlling a time for passage of a group of vehicles. Thus, the time controlling system 200 may, for example, be utilized for an example signalling 300a of Figure 3a and/or for an example signalling 300b of Fig 3b.

A first vehicle 201, i.e. a leader vehicle, comprises an apparatus for controlling a time for passage of a group of vehicles. The apparatus comprises a memory comprising executable instructions, wherein one or more processors are configured to communicate with the memory.

The one or more processors are configured to cause the apparatus to send an identifying signal to at least a second vehicle 202 and 203 in the group of vehicles and receive a response signal from the at least second vehicle 202 and 203 in the group of vehicles.

The one or more processors are further configured to cause the apparatus to determine a time for passaging a certain point along a road for the group of vehicles based on the response signal and communicate 205 the determined time 205 to a roadside unit 204.

In some embodiments, the one or more processors are further configured to cause the apparatus to, in response to communicating 205 the determined time to the road side unit 304, receive an allocated time from the roadside unit 304 in which the group of vehicles may pass.

In some embodiments, the one or more processors are further configured to cause the apparatus to determine a position of the at least second vehicle 202 and 203 in the group of vehicles based on the received response signal.

The road side unit 204, e.g. a traffic light, may be controlled via a controller, e.g. a traffic light controller, comprised in the road side unit 204 and/or in a cloud service 206. The controller comprised in the cloud 206 may receive a continuous stream of time information C received first by the road side unit 204, as described above, for possible analysis, prediction and allocation.

The cloud 206 comprises at least one cloud database and/or at least one server database which are databases that typically run on a cloud computing platform and access to it is provided as a service. The database services may provide scalability and high availability of the database. The cloud may be comprised in a one separate cloud service or in a plurality of associated cloud services.

The cloud 206 may be connected to road side units, vehicles or any other infrastructure which may provide relevant information about traffic conditions and traffic flows.

Figure 3a is a schematic drawing illustrating an example signaling according to some embodiments. The time controlling system 200 illustrated in Figure 2 may, for example, be utilized for an example signalling 300a of Figure 3a.

Figure 3a illustrates an environment comprising a group of vehicles 301,302,303 i.e. a platoon of vehicles. The platoon is driving on a road towards a road side unit 304, e.g. a traffic light. The first vehicle 301, i.e. the leader vehicle, sends an identifying signal, e.g. a broadcast signal, via e.g. V2V communication to at least a second vehicle 302 and 303 in the group of vehicles with length L.

The first vehicle 301 receives a response signal from the at least second vehicle 302 and 303, i.e. the following vehicles, in the group of vehicles and determines a time for passage of a certain point along a road, e.g. the road side unit 304, for the group of vehicles based on the response signal from the following vehicles and communicates 305 the determined time to the roadside unit 304.

The first vehicle 301, may in turn of communicating the determined time to the road side unit 304 receive an allocated time from the roadside unit 304 in which the group of vehicles may pass.

The first vehicle 301, may also, based on the response signal from the following vehicles determine a position of the at least second vehicle 302 and 303 in the group of vehicles.

The identifying signal, e.g. a broadcast signal, and the response signal are radio signals transmitted via V2V communication comprising an ID field, a Properties field, a Timecode field and a Platoon field unique for each vehicle.

Figure 3b is a schematic drawing illustrating an example signaling according to some embodiments. The time controlling system 200 illustrated in Figure 2 may, for example, be utilized for an example signalling 300b of Figure 3b.

Figure 3b illustrates an environment comprising a group of vehicles 301,302,303 i.e. a platoon of vehicles. The platoon is driving on a road towards a road side unit 304, e.g. a traffic light.

In signalling step 3001, the leader vehicle 301 sends an identifying signal via e.g. V2V communication to all following vehicles 302 and 303 in the group of vehicles. The identifying signal comprises an ID field = 0x32, a Properties field = Leader, a Timecode field = 00:00 and a Platoon field = 0x32:Lead. The identifying signal therefore comprises unique identifying information about the leader vehicle in the platoon, its role, the time of sending the identifying signal and configuration information (e.g. useful in case the platoon needs to be reconfigured according to the method steps of Figure 1b described above).

In signalling step 3002, the following vehicle 302 receives the identifying signal from the leader vehicle 301 and responds with a response signal. The response signal comprises an ID field = 0x48, a Properties field = Follower, a Timecode field = 00:15 and a Platoon field = 0x32:Lead, 0x48:Foll. The response signal therefore comprises unique identifying information about the following vehicle 302 in the platoon, its role, the time of receipt of the identifying signal and configuration information (e.g. useful in case the platoon needs to be reconfigured according to the method steps of Figure 1b described above).

In signalling step 3003, the following vehicle 303 receives the identifying signal from the leader vehicle 301 and responds with a response signal. The response signal comprises an ID field = 0xFA, a Properties field = Follower, a Timecode field = 00:20 and a Platoon field = 0x32:Lead, 0x48:Foll,0xFA:Foll. The response signal therefore comprises unique identifying information about the following vehicle 303 in the platoon, its role, the time of receipt of the identifying signal and configuration information (e.g. useful in case the platoon needs to be reconfigured according to the method steps of Figure 1b described above).

Based on the received response signals from all the following vehicles 302 and 303, the leader vehicle 301 determines which response signal comprises the latest time stamp and discards the others. The leader vehicle 301 therefore calculates the length of the platoon based on the response signal with the latest time stamp, in this example the response signal from vehicle 303 i.e. response signal 3003.

In signalling step 3005, the leader vehicle communicates with the road side unit 304 the length of the platoon i.e. the passage time and the road side unit 304 communicates with the leader vehicle 301 the allocated time for passing through.

The communication between the leader vehicle 301 and the road side unit 304 will occur as early as possible, as allowed by V2I communication, as the leader vehicle approaches the road side unit 304.

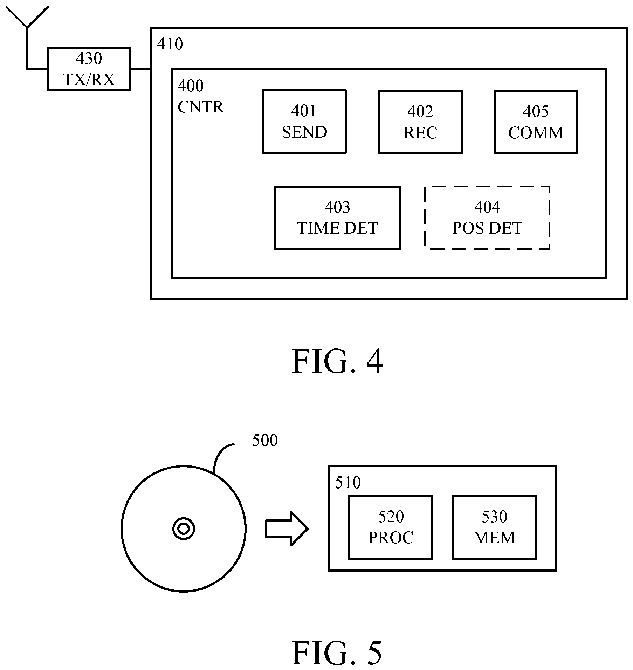

Figure 4 is a schematic block diagram illustrating an example arrangement according to some embodiments. The example arrangement is a time controlling arrangement 410 for controlling a time for passage of a group of vehicles.

The time controlling arrangement 410 comprises controlling circuitry CNTR 400, which may in turn comprise a sending arrangement SEND 401, e.g. sending circuitry, configured to send an identifying signal to at least a second vehicle in the group of vehicles, a receiving arrangement REC 402, e.g. receiving circuitry, configured to receive a response signal from the at least second vehicle in the group of vehicles, an time determining arrangement TIME DET 403, e.g. time determining circuitry, configured to determine a time for passaging a certain point along a road for the group of vehicles based on the response signal, and a communication arrangement COMM 405, e.g. communication circuitry, configured to communicate the determined time to a roadside unit.

In some embodiments, the controlling circuitry CNTR 400 may further comprise a position determining arrangement POS DET 404 e.g. position determining circuitry, configured to determine a position of the at least second vehicle in the group of vehicles based on the received response signal.

The time controlling arrangement 410 may be comprised in the time controlling system 200 described in connection with Figure 2 and/or the time controlling arrangement 410 may be configured to perform method steps of any of the methods described in connection with Figure 1a, Figure 1b, Figure 3a and Figure 3b.

Figure 5 is a schematic drawing illustrating an example computer readable medium according to some embodiments. The computer program product comprises a non-transitory computer readable medium 500 having thereon a computer program 510 comprising program instructions, wherein the computer program being loadable into a data processing unit and configured to cause execution of the method steps of any of the methods described in connection with Figure 1a, Figure 1b, Figure 3a and Figure 3b.

Generally, when an arrangement is referred to herein, it is to be understood as a physical product; e.g., an apparatus. The physical product may comprise one or more parts, such as controlling circuitry in the form of one or more controllers, one or more processors, or the like.

The described embodiments and their equivalents may be realized in software or hardware or a combination thereof. The embodiments may be performed by general purpose circuitry. Examples of general purpose circuitry include digital signal processors (DSP), central processing units (CPU), co-processor units, field programmable gate arrays (FPGA) and other programmable hardware. Alternatively or additionally, the embodiments may be performed by specialized circuitry, such as application specific integrated circuits (ASIC). The general purpose circuitry and/or the specialized circuitry may, for example, be associated with or comprised in an apparatus such as a vehicle.

Embodiments may appear within an electronic apparatus (associated with or comprised in a vehicle) comprising arrangements, circuitry, and/or logic according to any of the embodiments described herein. Alternatively or additionally, an electronic apparatus (associated with or comprised in a vehicle) may be configured to perform methods according to any of the embodiments described herein.

According to some embodiments, a computer program product comprises a computer readable medium such as, for example a universal serial bus (USB) memory, a plug-in card, an embedded drive or a read only memory (ROM). Figure 5 illustrates an example computer readable medium in the form of a compact disc (CD) ROM 500. The computer readable medium has stored thereon a computer program comprising program instructions. The computer program is loadable into a data processor (PROC) 520, which may, for example, be comprised in an apparatus or vehicle 510. When loaded into the data processing unit, the computer program may be stored in a memory (MEM) 530 associated with or comprised in the data-processing unit. According to some embodiments, the computer program may, when loaded into and run by the data processing unit, cause execution of method steps according to, for example, any of the methods illustrated in Figure 1a, Figure 1b, Figure 3a and Figure 3b or otherwise described herein.

Generally, all terms used herein are to be interpreted according to their ordinary meaning in the relevant technical field, unless a different meaning is clearly given and/or is implied from the context in which it is used.

Reference has been made herein to various embodiments. However, a person skilled in the art would recognize numerous variations to the described embodiments that would still fall within the scope of the claims.

For example, the method embodiments described herein discloses example methods through steps being performed in a certain order. However, it is recognized that these sequences of events may take place in another order without departing from the scope of the claims. Furthermore, some method steps may be performed in parallel even though they have been described as being performed in sequence. Thus, the steps of any methods disclosed herein do not have to be performed in the exact order disclosed, unless a step is explicitly described as following or preceding another step and/or where it is implicit that a step must follow or precede another step.

In the same manner, it should be noted that in the description of embodiments, the partition of functional blocks into particular units is by no means intended as limiting. Contrarily, these partitions are merely examples. Functional blocks described herein as one unit may be split into two or more units. Furthermore, functional blocks described herein as being implemented as two or more units may be merged into fewer (e.g. a single) unit.

Any feature of any of the embodiments disclosed herein may be applied to any other embodiment, wherever suitable. Likewise, any advantage of any of the embodiments may apply to any other embodiments, and vice versa.

Hence, it should be understood that the details of the described embodiments are merely examples brought forward for illustrative purposes, and that all variations that fall within the scope of the claims are intended to be embraced therein.

## Claims

1. A method for controlling a time for passage of a group of vehicles, comprising the steps of:
sending (100), by a first vehicle, an identifying signal to at least a second vehicle in the group of vehicles,
receiving (200), by the first vehicle, a response signal from the at least second vehicle in the group of vehicles,
determining (400) a time for passaging a certain point along a road for the group of vehicles based on the response signal, and
communicating (600) the determined time to a roadside unit.

2. The method according to claim 1, further comprising the step of:
determining (300) a position of the at least second vehicle in the group of vehicles based on the received response signal.

3. The method according to any of claims 1-2, wherein the position of the at least second vehicle in the group is the last position in the group of vehicles.

4. The method according to any of claims 1-3, wherein the identifying signal comprises a broadcast signal comprising an identity, properties, timecode and position of the first vehicle in the group of vehicles.

5. The method according to any of claims 1-4, wherein the identifying signal is continuously broadcasted.

6. The method according to any of claims 1-5, wherein the response signal comprises an identity, properties, timecode and position of the at least second vehicle in the group of vehicles.

7. The method according to any of claims 1-6, wherein the first vehicle comprises a leader vehicle and the at least second vehicle comprises a following vehicle.

8. The method according to any of claims 1-7, wherein the group of vehicles comprises a leader vehicle and a plurality of following vehicles.

9. The method according to any of claims 1-8, wherein the group of vehicles is a platoon of vehicles.

10. The method according to any of claims 1-9, wherein the method further comprises the step of:
adapting (500) a speed of the platoon to a threshold value in response to the determined time for passage of a certain point along the road so that passage of the platoon can be completed.

11. The method according to any of claims 1-10, wherein the method further comprises the steps of:
identifying (510) an additional leader vehicle amongst the plurality of following vehicles, setting up (520) a new configuration for the platoon,
sending (530) a configuring signal comprising information regarding the new configuration to the identified additional leader vehicle and the following vehicles assigned to the identified additional leader vehicle.

12. The method according to any of claims 1-11, wherein the road side unit is controlled via a controller comprised in the road side unit and/or in a cloud service.

13. A computer program product comprising a non-transitory computer readable medium, having thereon a computer program comprising program instructions, the computer program being loadable into a data processing unit and configured to cause execution of the method according to any of claims 1 through 12 when the computer program is run by the data processing unit.

14. An apparatus for controlling a time for passage of a group of vehicles, comprising:
a memory comprising executable instructions,
one or more processors configured to communicate with the memory wherein the one or more processors are configured to cause the apparatus to:
send an identifying signal to at least a second vehicle (202,203) in the group of vehicles, receive a response signal from the at least second vehicle (202,203) in the group of vehicles,
determine a time for passaging a certain point along a road for the group of vehicles based on the response signal, and
communicate (206) the determined time to a roadside unit.

15. The apparatus according to claim 14, wherein the one or more processors are further configured to cause the apparatus to:
determine a position of the at least second vehicle in the group of vehicles based on the received response signal.

16. A vehicle (201) comprising the apparatus according to any of claims 14-15.

17. A system for controlling a time for passage of a group of vehicles, comprising:
a sending module (401) configured to send an identifying signal to at least a second vehicle in the group of vehicles,
a receiving module (402) configured to receive a response signal from the at least second vehicle in the group of vehicles,
a time determining module (403) configured to determine a time for passaging a certain point along a road for the group of vehicles based on the response signal, and
a communication module (405) configured to communicate the determined time to a roadside unit.

18. The system according to claim 17, further comprising:
a position determining module (404) configured to determine a position of the at least second vehicle in the group of vehicles based on the received response signal.
